# EUROPEAN PATENT SPECIFICATION

(11) **EP 1 342 409 B1**
(45) Date of publication and mention of the grant of the patent: **12.11.2003**
(21) Application number: 02425123.3
(22) Date of filing: 05.03.2002
(51) Int. Cl.: A01K 39/012

(54) **Feeding trough with circular dish**
Futtertrog mit einem runden Behälter
Auge avec plat rond

(43) Date of publication of application: 10.09.2003
(73) Proprietor: SKA S.P.A., I-36066 Sandrigo (Vicenza) (IT)
(72) Inventor: Mastropasqua, Berardo, 36100 Vicenza (IT); Manfrin, Adriano, 36066 Sandrigo (Vicenza) (IT)
(74) Representative: Lanzoni, Luciano

(56) References cited:
- DD-A- 221 055
- US-A- 5 765 503

## Description

The present invention relates to a feeding trough with circular dish comprising the characteristics expressed in the preamble to claim 1, see e.g. document US-A-5 765 503.

The preferred application field of the present invention is poultry farming, but the invention can be applied to any other type of animal breeding in which it may be useful.

A very pressing problem for poultry farmers is constituted by feed wastage.

When farm animals peck for the feed, they tend to throw a part thereof out of the edge of the dish, which part is irremediably lost, especially because in most cases feed trough are mounted above a grid, below which the animals cannot reach.

To limit said wastage, the solution employed today is to use an external collar inclined towards the feed trough.

In this way a part of the feed that is accidentally made to escape the trough returns thereto.

However, this solution is not applicable for mid to small size animals, which would be unable to reach the feed once the collar is applied.

A second need of the industry is to best exploit each feed trough, i.e. to let it be used by the highest possible number of animals at the same time.

This need is particularly acute when animal farming requires rationing the feed. In this case, when the fresh feed arrives the animals attack the troughs. In most cases the total number of troughs is computed substantially by dividing the total number of animals in the facility by the number of animals that theoretically can use each feeding trough at the same time. Hence, if the number of animals that are actually able to use the feeding trough simultaneously is lower than the theoretical one, some of the animals risk remaining without food (in a rationing situation, the animals are always hungry and the per capita feed dosage is not sufficient wholly to sate their hunger).

The solution currently in use to solve the aforementioned problems provides for the use of the same small-diameter feed troughs throughout the growth cycle of the animals with the addition of an external collar, similar to the one mentioned above for the retrieval of the feed, when the animals reach a given size.

Such collars have a circular inner edge able to be applied to the outer profile of the feed trough, from which develops an annular part inclined outwards and ending in an external upper edge, also circular.

In this way the various animals enter the trough only with their head and neck, setting the breast down against the outer edge of the collar.

In practice, thus, the collar increases the diameter and raises the elevation of the edge of the trough, allowing a higher number of animals to access the dish of the feeding trough simultaneously.

However, this solution does not solve the problem altogether.

While it does in fact provide for a better exploitation of the feeding trough in some cases it is not yet optimal.

In particular the overall number of animals that simultaneously access the dish depends on how the first arrivals position themselves. If, for instance, they position themselves obliquely, or they move too far forward with their bodies, they occupy more space than the amount theoretically provided for them, preventing the other animals from accessing the feeding trough.

Another very acute problem is to prevent small size animals (such as newly hatched chicks) from accessing the feeding trough dish to prevent them from soiling the food contained therein with their droppings.

To achieve this purpose, prior art feeding troughs are provided with a cone associated to the dispenser which covers most of the bottom of the dish. If such feeding troughs were to be used with large size animals, however, said cone would have to be removed once the animals reach and exceed, during their growth, a certain threshold size.

Alternatively, walls with radial extension can be provided, associated to the bottom of the dish in correspondence with the lower end of the dispenser.

Both said solution, while functional when the animals are small, become inconvenient when the animals grow, because it would be advisable to remove them from the feeding trough to allow the animals to access the dish more easily.

An additional requirement, strongly felt by poultry farmers, is to use a single feeding troughs in all the life phases of the animals, and possibly for different types of animals bred (chickens, turkeys, etcetera).

In this situation the technical task constituting the basis for the present invention is to obtain a feeding trough with circular dish that overcomes the aforementioned drawbacks, and that is able to limit the feed wastage due to the animals' specific manner of feeding.

In particular, a technical task of the present invention is to obtain a feeding trough with circular dish that can be used throughout the animals' life cycle and for animals of different sizes.

Another technical task of the present invention is to obtain a feeding trough with circular dish that guarantees the optimal exploitation of the feeding trough allowing the simultaneous access of the highest possible number of animals.

A further technical task of the present invention is to obtain a feeding trough with circular dish that can prevent smaller animals from entering the dish without hindering the larger ones.

The specified technical task and the aims set out above are substantially achieved by a feeding trough with circular dish, as described in the accompanying claims.

Further characteristics and the advantages of the present invention shall become more readily apparent from the detailed description of some preferred, but not exclusive embodiments of a feeding trough with circular dish, illustrated in the accompanying drawings, in which:
- Figure 1 shows a three-quarters perspective view of a feeding trough according to the present invention;
- Figure 2 shows a section side elevation view of the lower part of the feeding trough of Figure 1;
- Figure 3 shows a three-quarters perspective view of the feeding trough of Figure 2 with a positioning collar applied;
- Figure 4 shows a plan view of the feeding trough of Figure 3;
- Figure 5 shows a lateral elevation view of the positioning collar of the feeding trough of Figure 3;
- Figure 6 shows a bottom plan view of the collar of Figure 5;
- Figure 7 shows the collar of Figure 5 according to the trace VII-VII of Figure 6;
- Figure 8 shows a plan view of an anti-intrusion organ of the feeding trough of Figure 1 and 3;
- Figure 9 shows a lateral elevation view of the anti-intrusion organ of Figure 8;
- Figure 10 shows the anti-intrusion organ of Figure 8 according to the trace X-X of Figure 8;
- Figure 11 shows a lateral elevation view of the dispenser of the feeding trough of Figure 1 and 3;
- Figure 12 shows a top sectioned view of a detail of the feeding trough of Figure 1 and 3; and
- Figure 13 shows a schematic lateral elevation view of different mutual positions that can be assumed by the dish and the dispenser of the feeding trough of the present invention.

With reference to the aforementioned figures, the reference number 1 globally indicates a feeding trough with circular dish, according to the present invention.

The feeding trough 1 is constituted by a lower feed container dish 2 having a raised peripheral edge 3, by a dispenser 4 positioned above the dish 2, and by at least an element 5 for connecting the dispenser 4 to the dish 2.

The dispenser 4 is positioned in correspondence with the vertical axis of the dish 2 and has an upper end 6 able to be associated to a conduit for supplying the feed, and a lower end 7 oriented towards the dish 2.

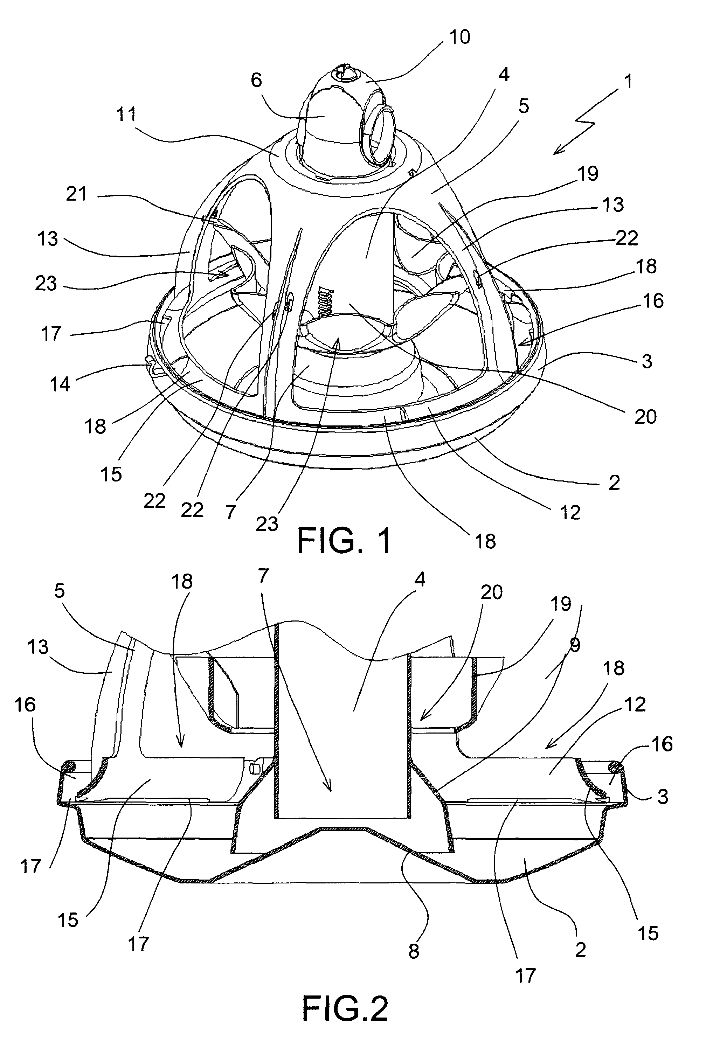

In the embodiment shown in the accompanying figures, the dish 2 further has a convex area 8 positioned underneath the dispenser 4 (Figure 2) whilst the latter is provided, in correspondence with its own lower end 7, with a broadened area 9.

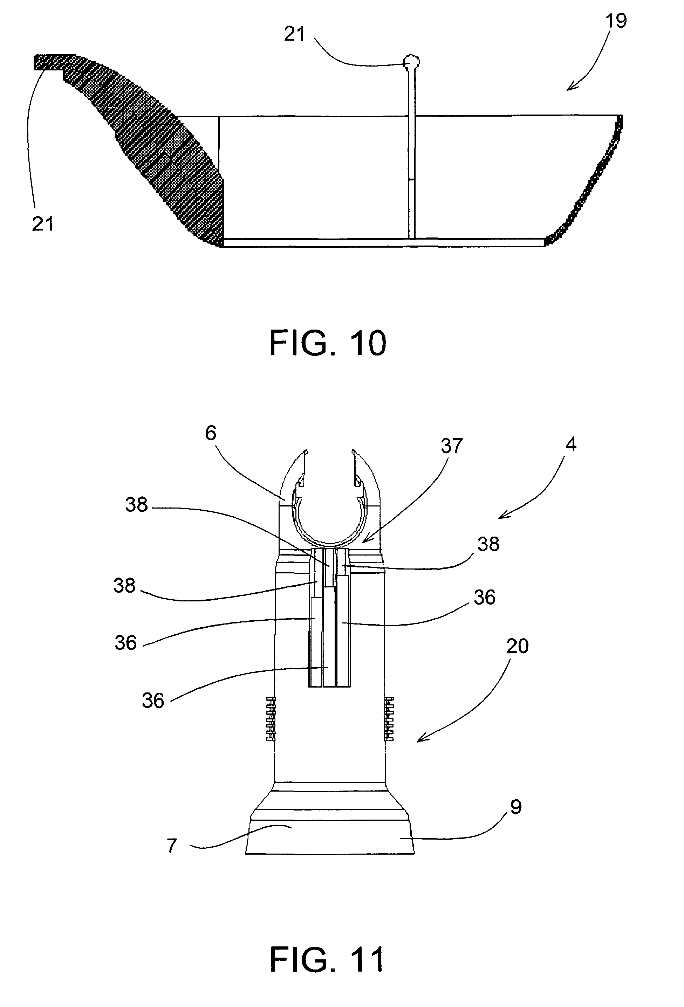

As shown in Figure 11, the upper end 6 of the dispenser 4 has a removable part 10 that allows its easy mounting on the feed supply conduit.

In regard to the connecting element 5, it is constituted, in the illustrated embodiment, by an upper ring 11 associated to the dispenser 4, by a lower ring 12 associated to the dish 2 and by a plurality of spokes 13 that extend from the upper ring 11 to the lower ring 12 in radial planes relative to the vertical axis of the dish 2.

The lower ring 12 is associated to the dish 2 by means of an appropriate hook 14 inserted through the peripheral edge 3 of the dish 2 itself.

As shown in Figures 1 and 2, the feeding trough 1 further comprises a feed retrieval edge 15 mounted internally to the peripheral edge 3 in co-operation with which it defines a feed collecting channel 16, destined to receive the feed that is accidentally made to spill out of the dish 2 by the animals.

The channel 16 inferiorly has at least an outlet 17 that places it in communication with the dish 2, in such a way as to discharge into the dish 2 itself the feed that falls into the channel 16.

In the illustrated embodiment, the retrieval edge 15 develops along the entire peripheral edge 3 of the dish 2, is constituted by the lower ring 12 of the connecting element 5, and is substantially subdivided into four sectors 18 each delimited by two successive spokes 13. Moreover, one or more outlets 17 towards the dish 2 can be provided in each sector 18.

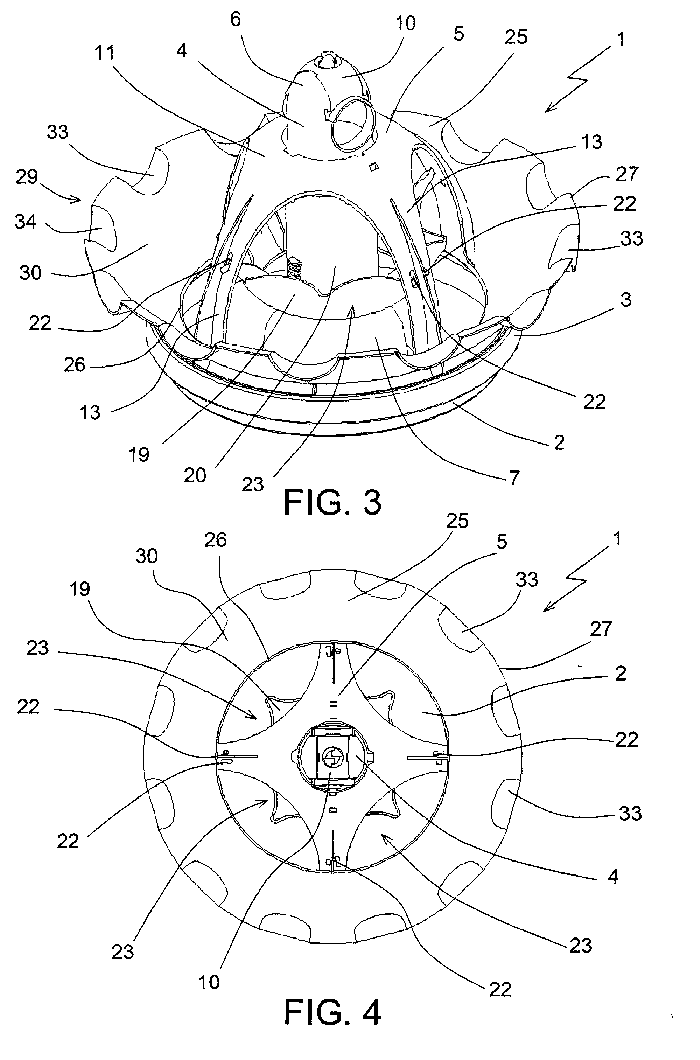

As shown in Figures 1 and 3, the feeding trough 1 can also be provided with an anti-intrusion organ 19 able to limit the access of small size animals inside the dish 2.

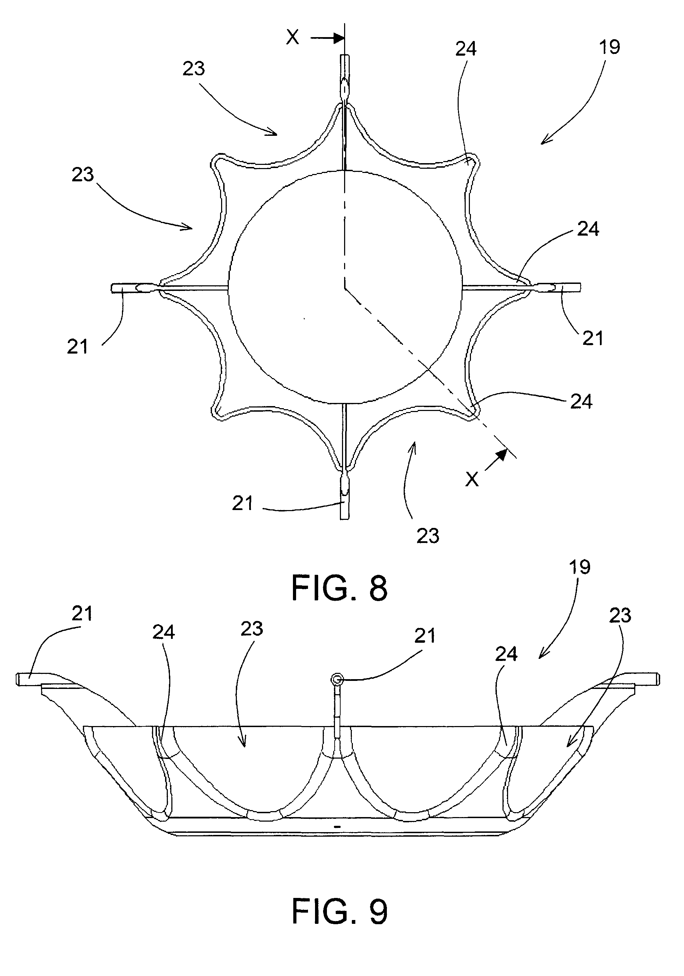

The anti-intrusion organ 19 (illustrated in particular in Figures 8 through 10) is ring shaped and it is mounted coaxially to the dispenser 4 in correspondence with an intermediate portion 20 thereof. Moreover, in the preferred embodiment, the anti-intrusion organ 19 is fastened to the connecting element 5 by means of appropriate connecting appendages 21 that are coupled with holes 22 obtained in the spokes 13. Advantageously, multiple holes 22 can be provided at different heights, such as to enable to adapt the position of the anti-intrusion organ 19 to the different breeding requirements (in the illustrated embodiment, for instance, two positions are provided).

The anti-intrusion organ 19 defines a plurality of internal compartments 23 distributed circumferentially along its outer profile.

Each compartment 23 has a concave arched profile towards the exterior of the anti-intrusion organ 19 itself, which in turn has, if observed in plan view, a plurality of outwardly oriented projections 24. Each projection 24 is included between two contiguous compartments 23 to prevent small size animals at least from moving from a compartment 23 to another within the dish 2.

As shown in Figure 3, the feeding trough 1 can further comprise a positioning collar 25 applicable externally and in removable fashion to the peripheral edge 3 of the dish 2, to allow an optimal exploitation of the feeding trough 1 even with mid and large size animals.

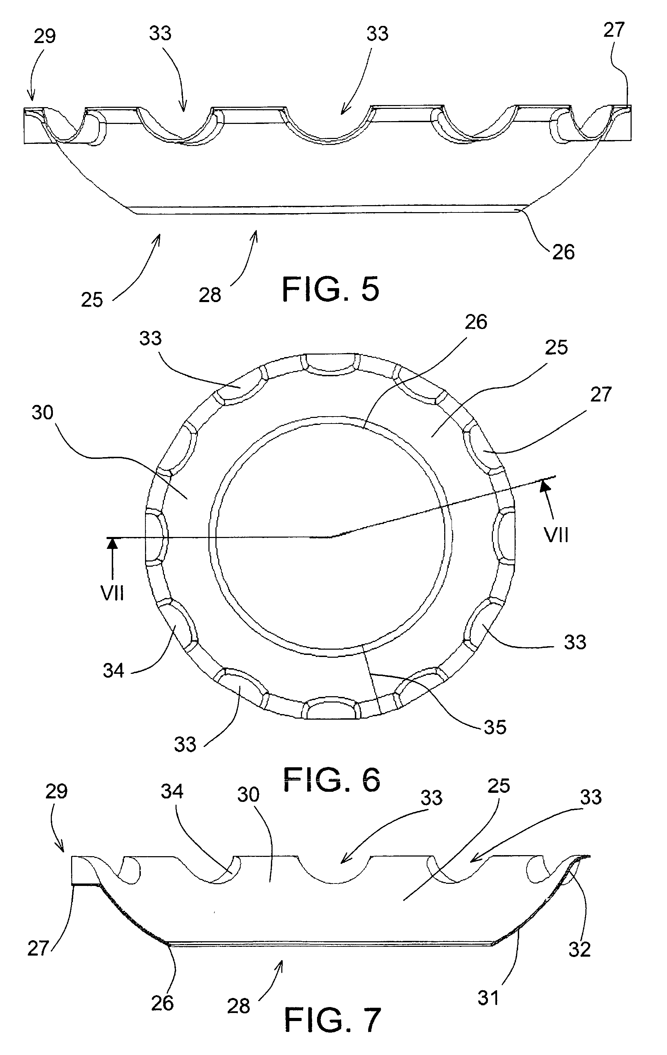

The collar 25 has annular shape and has an inner edge 26 and an outer edge 27, both circular and mutually coaxial (Figures 5-7).

The inner edge 26 can be associated to the peripheral edge 3 of a dish 2 of a feeding trough 1 and identifies a lower base 28 of the collar 25.

The outer edge 27 is instead obtained in an upper portion 29 of the collar 25, and once the collar 25 is applied to a feeding trough 1 it is positioned at a higher elevation relative to the inner edge 26 (Figure 3).

Between the two edges 26, 27, the collar 25 has a connecting surface 30 which, in the illustrated embodiment, has a first concave segment 31 extending from the inner edge 26 towards the outer edge 27, and a second convex segment 32 joined thereto and extending from the outer edge 27 towards the inner one 26.

The positioning collar 25 further comprise a plurality of stations 33 distributed along the outer edge 27, each of which is identified at least partially by a smooth and concave portion 34 of the connecting surface 30, and constitutes, in use, a support for the breast or the neck of a single animal stretched towards the interior of the feeding trough 1.

In particular, the stations 33 are uniformly distributed along the outer edge 27, and each of them is defined by a portion 34 of the surface 30 which develops on a cylindrical surface with radial axis relative to the collar 25.

Alternatively said surface portion 34 can develop on a conical surface diverging towards the exterior of the collar 25 itself (not shown herein).

Advantageously, the collar 25 can further have a notch 35 which extends from the inner edge 26 to the outer edge 27 to allow the opening of the collar 25 and its positioning on the feeding trough 1, as well as any securing means (not shown), such as a snap-on connection, associated to the notch 35 to enable and disable selectively the opening of the collar 25.

An additional characteristic of the feeding trough 1 shown in the accompanying figures is the fact that the connecting element 5 is associated in sliding fashion to the dispenser 4 according to a vertical direction of sliding.

In particular the dispenser 4 has a plurality of vertical grooves 36, mutually specular and located in diametrically opposite positions.

Each groove 36 has in its upper part 37 a seat 38 whereto can be associated a corresponding engagement organ 39 mounted on the connecting element 5. In each plurality of grooves 36, the different seats 38 are obtained at a different height of the dispenser 4, in such a way as to allow the positioning at different distances of the dispenser 4 relative to the dish 2, in the ways described below.

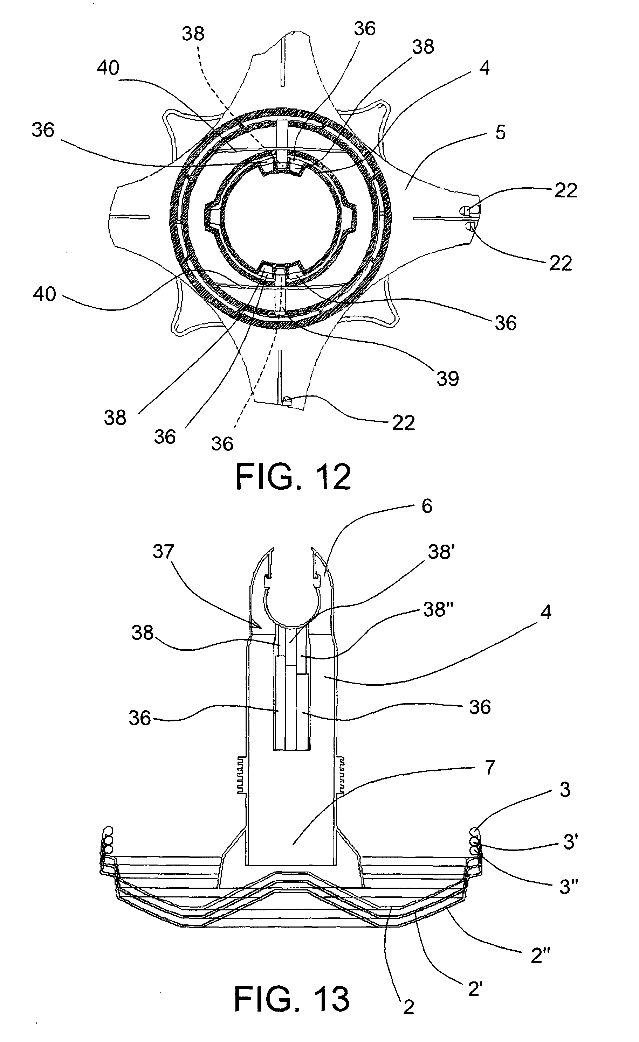

As shown in Figure 12, the engagement organ 39 is movable horizontally and transversely to the direction of sliding of the connecting element 5 relative to the distributor 4, and it is pressed against the groove 36 in which it is inserted, by a spring 40 which, in the illustrated embodiment, is a flat spring integral thereto.

Depending on the type of animal to be bred, of the period of its life, and of the type of feed used, the farmer who uses the feeding trough 1 of the present invention can adjust in optimal fashion the distance between the bottom of the dish 2 and the lower end 7 of the dispenser 4.

According to preferred usage procedures, during the first days in the life of the animal the engagement organ 39 is positioned in correspondence with a lower end 7 of the related groove 36 and the distance between the dispenser 4 and the dish 2 is the greatest as is the level of the feed contained in the dish 2.

In this period, moreover, the feeding trough 1 lacks the positioning collar 25 and is set down on the ground.

During the first days of life the anti-intrusion organ 19 also serves its purpose. The chicks that attempt to enter into the dish 2 are substantially locked in the related compartment 23 without being able to move into the adjacent compartments 23 and being unable to peck the feed below them with ease.

This causes the chicks to be discouraged from entering inside the feeding trough 1, preventing them from soiling the food with their droppings.

As the animals grow, it becomes necessary to decrease the distance between dish 2 and dispenser 4 and raise the feeding trough 1 off the ground.

This is obtained, with the dish 2 set down on the floor, by first lowering the feed supply conduit and then the dispenser 4 integral therewith, letting the engagement organs 39 slide in the related grooves until they are inserted into the related seats 38. At this point the conduit is made to return upwards and the feeding trough 1 raises therewith whilst the dish 2 and the dispenser 4 remain at the required distance.

The selection of the groove 36 into which the engagement organ 39 is to be inserted (and hence of the distance between dispenser 4 and dish 2 under steady state conditions) is advantageously made only once at the start of the breeding cycle.

Different mutual positions of the dish 2 of the dispenser 4 are shown in Figure 13, where the dish 2 is positioned at the height corresponding to the insertion of the engagement element in the seat 37, the dish 2' is positioned at the height corresponding to the insertion of the engagement element in the seat 38' and the dish 2" is positioned at the height corresponding to the insertion of the engagement element in the seat 38".

When the feeding trough 1 is set up for adult or nearly adult animals, the level of the feed in the feeding trough 1 is lower than the one for the chicks and hence the anti-intrusion organ 19 is at a sufficient distance from the feed not to hamper the insertion of the heads of the animals into the feeding trough 1, even in correspondence with its own projections 24.

For mid to large size animals (for instance ducks, turkeys, etcetera) after an additional period of time it becomes necessary to add the positioning collar 25, which by maintaining the animals' bodies distanced from the dish 2, allows a maximal exploitation of the feeding trough 1.

The presence of the stations 33 obtained in the collar 25 causes the animals to position themselves exactly in correspondence therewith since access to the food is easier for them.

The present invention thus achieves important advantages.

In the first place the feeding trough 1 with circular dish 2 of the present invention limits the wastage of feed inherent in the feeding procedures of poultry animals even during the first phases of their lives.

Moreover, said feeding trough 1 can be used, with simple and rapid adjustments, throughout the animals' lives and for different types of animals, such as chickens, ducks, turkeys, etcetera.

A further advantage of the present feeding trough 1 is that it can be exploited in optimal fashion and hence it can allow the simultaneous access of the highest possible number of animals.

Not least, the feeding trough 1 of the present invention allows to prevent smaller animals from entering the dish 2 without having to add, remove or move components, and at the same time without hindering in any way the animals once they have grown.

It should also be noted that the present invention is relatively easy to implement and that also the cost connected with the realisation of the invention is not very high.

All components can be replaced with other technically equivalent elements and in practice all materials employed, as well as the shapes and dimensions of the various components, may be any depending on requirements.

## Claims

1. Feeding trough with circular dish having a lower dish (2) for containing the feed, having a raised peripheral edge (3), a dispenser (4) able to be associated superiorly to a conduit for supplying the feed, and inferiorly facing said dish (2), and at least an element (5) connecting said dispenser (4) to said dish (2), further comprising an edge (15) for retrieving the feed, mounted internally to said peripheral edge (3) and defining with said peripheral edge (3) a channel (16) for collecting the feed, **characterised in that** said channel (16) has inferiorly at least an outlet (17) which places in communication said channel (16) with said dish (2), to discharge into the dish (2) the feed that falls in said channel (16).

2. Feeding trough as claimed in claim 1 **characterised in that** said channel (16) extends substantially along the whole peripheral edge (3) of the dish (2).

3. Feeding trough as claimed in claim 1 or 2 **characterised in that** said channel (16) has a plurality of outlets.

4. Feeding trough as claimed in any of the previous claims **characterised in that** said connecting element (5) comprises an upper ring (11) associated to the dispenser (4) and a plurality of spokes (13) branching off said upper ring (11) and able to support said dish (2), said retrieval edge (15) constituting a lower ring (12) for joining said spokes (13).

5. Feeding trough as claimed in any of the previous claims **characterised in that** it further comprises an anti-intrusion organ (19) to limit the access of small size animals to the interior of the dish (2).

6. Feeding trough as claimed in claim 5 **characterised in that** said anti-intrusion organ (19) has substantially annular shape, is mounted coaxially to the dispenser (4) above the dish (2) and defines a plurality of compartments (23) distributed circumferentially along its outer profile.

7. Feeding trough as claimed in claim 6 **characterised in that** each compartment (23) has a concavity oriented towards the exterior of the anti-intrusion organ (19), said anti-intrusion organ (19) having a plurality of projections (24) oriented outwards, each included between two contiguous compartments (23) to prevent animals at least from moving from a compartment (23) to another within said dish (2).

8. Feeding trough as claimed in any of the claims 5 through 7 **characterised in that** said anti-intrusion organ (19) is supported by said connecting element (5).

9. Feeding trough as claimed in any of the previous claims **characterised in that** it further comprises a positioning collar (25) with substantially annular shape having a circular inner edge (26) able to be associated in removable fashion to the peripheral edge (3) of the dish (2), an outer edge (27) developing externally to said inner edge (26) in correspondence with an upper portion (29) of said collar (25), a connecting surface (30) between said inner edge (26) and said outer edge (27) at least partly pending towards the interior of the feeding trough (1).

10. Feeding trough as claimed in claim 9 **characterised in that** said positioning collar (25) further comprises a plurality of stations (33) distributed along said outer edge (27), each of said stations (33) being identified at least partially by a smooth and upwardly concave portion (34) of said surface (30), and constituting in use a support for a single animal stretched towards the interior of the feeding trough (1).

11. Feeding trough as claimed in claim 10 **characterised in that** said stations (33) are uniformly distributed along said outer edge (27).

12. Feeding trough as claimed in claim 9, 10 or 11 **characterised in that** said surface (30) has at least a first concave segment (31) extending from said inner edge (26) towards said outer edge (27).

13. Feeding trough as claimed in claim 12 **characterised in that** said surface (30) further comprises at least a second convex segment (32) extending from said outer edge (27) towards said inner edge (26) and joined to said first segment (31).

14. Feeding trough as claimed in any of the claims 10 through 13 **characterised in that** each portion of said surface (30) which defines one of said stations (33) develops on a part of a surface a cylinder having its axis extending radially relative to the collar (25).

15. Feeding trough as claimed in any of the claims 10 through 13 **characterised in that** each portion of said surface (30) which defines one of said stations (33) develops on a part of a substantially conical surface with its conicity oriented outwards.

16. Feeding trough as claimed in any of the claims 10 through 15 **characterised in that** said collar (25) further has a notch (35) extending from said inner edge (26) to said outer edge (27) to allow the opening of the collar (25) and its positioning on the feeding trough (1), and securing means associated to said notch (35) to selectively enable and disable the opening of the collar (25).

17. Feeding trough as claimed in any of the previous claims **characterised in that** said connecting clement (5) is associated in sliding fashion a said dispenser (4) according to a vertical direction of sliding, **in that** said dispenser (4) has at least a first plurality of vertical grooves (36) each of which has in its upper part (37) a seat (38), and **in that** it further comprises at least an engagement organ (39) associated to said connecting element (5), inserted able to slide in one of the grooves (36) of said first plurality, said engagement organ (39) being able to be inserted in said seats (38), each of said seats (38) being obtained at a different height of said dispenser (4) to allow the positioning at different distances of the base of the dispenser (4) relative to the dish (2).

## Patentansprüche

1. Futtertrog mit einem kreisförmigen Behälter, enthaltend eine untere Schale (2) zur Aufnahme des Futters, welche einen erhöhten umlaufenden Rand (3) aufweist, sowie einen Verteiler (4), in der Lage, oben einer Leitung zum Zuführen des Futters zugeordnet zu werden, und der unten der genannten Schale (2) zugewandt ist, und wenigstens ein Element (5), das den genannten Verteiler (4) mit der genannten Schale (2) verbindet, wobei der Futtertrog ausserdem einen Rand (15) zum Sammeln des Futters enthält, der innerhalb des genannten umlaufenden Randes (3) montiert ist und zusammen mit dem genannten umlaufenden Rand (3) einen Kanal (16) zum Sammeln des Futters bildet, **dadurch gekennzeichnet, dass** der genannte Kanal (16) unten wenigstens eine Auslassöffnung (17) aufweist, welche den genannten Kanal (16) mit der genannten Schale (2) in Verbindung bringt, um das in den genannten Kanal (16) fallende Futter in die Schale (2) abzugeben.

2. Futtertrog nach Patentanspruch 1, **dadurch gekennzeichnet, dass** sich der genannte Kanal (16) im wesentlichen entlang dem gesamten umlaufenden Rand (3) der Schale (2) erstreckt.

3. Futtertrog nach Patentanspruch 1 oder 2, **dadurch gekennzeichnet, dass** der genannte Kanal (16) eine Anzahl von Auslassöffnungen hat.

4. Futtertrog nach einem beliebigen der vorstehenden Patentansprüche, **dadurch gekennzeichnet, dass** das genannte Verbindungselement (5) einen oberen Ring (11) enthält, der dem Verteiler (4) zugeordnet ist, und eine Anzahl von Speichen (13), die von dem genannten oberen Ring (11) aus abzweigen und in der Lage sind, die genannte Schale (2) und den genannten, einen unteren Ring (12) zum Verbinden der genannten Speichen (13) bildenden Sammelrand (15) zu halten.

5. Futtertrog nach einem beliebigen der vorstehenden Patentansprüche, **dadurch gekennzeichnet, dass** er ausserdem ein Element (19) gegen das Eindringen von Kleintieren in das Innere der Schale (2) enthält.

6. Futtertrog nach Patentanspruch 5, **dadurch gekennzeichnet, dass** das genannte Element (19) gegen das Eindringen im wesentlichen ringförmig ausgebildet ist, koaxial zu dem Verteiler (4) und oberhalb der Schale (2) montiert ist und eine Anzahl von Fächern (23) beschreibt, die umlaufend entlang seinem äusseren Profil verteilt sind.

7. Futtertrog nach Patentanspruch 6, **dadurch gekennzeichnet, dass** jedes Fach (23) eine Vertiefung aufweist, die nach ausserhalb des Elementes (19) gegen das Eindringen orientiert ist, wobei das genannte Element (19) gegen das Eindringen eine Anzahl von nach aussen gerichteten Vorsprüngen (24) hat, jeder angeordnet zwischen zwei aneinandergrenzenden Fächern (23), um die Tiere wenigstens daran zu hindern, sich von einem Fach (23) in das andere innerhalb der genannten Schale (2) zu bewegen.

8. Futtertrog nach einem beliebigen der Patentansprüche von 5 bis 7, **dadurch gekennzeichnet, dass** das genannte Element (19) gegen das Eindringen durch das genannte Verbindungselement (5) getragen wird.

9. Futtertrog nach einem beliebigen der vorstehenden Patentansprüche, **dadurch gekennzeichnet, dass** er ausserdem einen Positionierkragen (25) von im wesentlichen ringförmiger Ausbildung enthält, der eine kreisförmige Innenkante hat, in der Lage, auf lösbare Weise dem umlaufenden Rand (3) der Schale (2) zugeordnet zu werden, eine Aussenkante (27), die sich ausserhalb der genannten Innenkante (26) entsprechend einem oberen Abschnitt (29) des genannten Kragens (25) erstreckt, sowie eine Verbindungsfläche (30) zwischen der genannten Innenkante (26) und der genannten Aussenkante (27), welche wenigstens zum Teil nach innen des Futtertroges (1) hin geneigt ist.

10. Futtertrog nach Patentanspruch 9, **dadurch gekennzeichnet, dass** der genannte Positionierkragen (25) ausserdem eine Anzahl von entlang der Aussenkante (27) verteilten Stationen (33) enthält, wobei jede der genannten Stationen (33) wenigstens zum Teil durch einen glatten und nach aufwärts gerichteten Abschnitt (34) der genannten Oberfläche (30) beschrieben wird und im Betrieb eine Stütze für ein einzelnes Tier bildet, das sich zum Inneren des Futtertroges (1) hin streckt.

11. Futtertrog nach Patentanspruch 10, **dadurch gekennzeichnet, dass** die genannten Stationen (33) gleichmässig entlang der genannten Aussenkante (27) verteilt sind.

12. Futtertrog nach Patentanspruch 9, 10 oder 11, **dadurch gekennzeichnet, dass** die genannte Oberfläche (30) wenigstens einen ersten konkaven Abschnitt (31) hat, der sich von der genannten Innenkante (26) zu der genannten Aussenkante (27) hin erstreckt.

13. Futtertrog nach Patentanspruch 12, **dadurch gekennzeichnet, dass** die genannte Oberfläche (30) ausserdem wenigstens einen zweiten konvexen Abschnitt (32) enthält, der sich von der genannten Aussenkante (27) zu der genannten Innenkante (26) hin erstreckt und sich an den genannten ersten Abschnitt (31) anschliesst.

14. Futtertrog nach einem beliebigen der Patentansprüche von 10 bis 13, **dadurch gekennzeichnet, dass** jeder Abschnitt der genannten Oberfläche (30), welcher eine der genannten Stationen (33) beschreibt, sich entlang einem Teil einer zylindrischen Oberfläche entwickelt, deren Achse sich im Verhältnis zu dem Kragen (25) radial erstreckt.

15. Futtertrog nach einem beliebigen der Patentansprüche von 10 bis 13, **dadurch gekennzeichnet, dass** jeder Abschnitt der genannten Oberfläche (30), welcher eine der genannten Stationen (33) beschreibt, sich entlang einem Teil einer im wesentlichen konischen Oberfläche entwickelt, deren Konizität nach aussen gerichtet ist.

16. Futtertrog nach einem beliebigen der Patentansprüche von 10 bis 15, **dadurch gekennzeichnet, dass** der genannte Kragen (25) ausserdem einen Einschnitt (35) aufweist, der sich von der genannten Innenkante (26) zu der genannten Aussenkante (27) erstreckt, um das Öffnen des Kragens (25) und dessen Positionierung auf dem Futtertrog (1) zu erlauben, sowie dem genannten Einschnitt (35) zugeordnete Sicherungsmittel, um wahlweise das Öffnen des Kragens (25) zu ermöglichen oder nicht.

17. Futtertrog nach einem beliebigen der vorstehenden Patentansprüche, **dadurch gekennzeichnet, dass** das genannte Verbindungselement (5) auf eine in vertikaler Gleitrichtung gleitbaren Weise einem genannten Verteiler (4) zugeordnet ist, dass der genannte Verteiler (4) wenigstens eine erste Anzahl von vertikalen Rillen (36) aufweist, von denen jede in ihrem oberen Teil (37) einen Sitz (38) hat, und dass er ausserdem ein dem genannten Verbindungselement (5) zugeordnetes Klemmelement (39) enthält, das eingesetzt in der Lage ist, in einer der Rillen (36) der genannten ersten Anzahl zu gleiten, wobei das genannte Klemmelement (39) dazu bestimmt ist, in die genannten Sitze (38) eingesetzt zu werden, und wobei jeder der genannten Sitze (38) auf einer unterschiedlichen Höhe des genannten Verteilers (4) erhalten ist, um die Positionierung in verschiedenen Abständen von der Basis der Verteilers (4) zu der Schale (2) zu erlauben.

## Revendications

1. Auge avec plat rond ayant un plat inférieur (2) en mesure de contenir l'aliment, ayant un bord périphérique relevé (3), un distributeur (4) pouvant être associé supérieurement à un conduit de distribution de l'aliment, et se trouvant inférieurement en face dudit plat (2), et au moins un élément (5) de raccord entre ledit distributeur (4) et ledit plat (2), incluant également un bord (15) en mesure de récupérer l'aliment, monté intérieurement audit bord périphérique (3) et formant avec ledit bord périphérique (3) un canal (16) pour la récolte de l'aliment, **caractérisé en ce que** ledit canal (16) possède inférieurement au moins une sortie (17) qui met en communication ledit canal (16) et ledit plat (2), pour décharger dans le plat (2) l'aliment qui tombe dans ledit canal (16).

2. Auge selon la revendication 1 **caractérisée en ce que** ledit canal (16) est essentiellement disposé tout le long du bord périphérique (3) du plat (2).

3. Auge selon la revendication 1 ou 2 **caractérisée en ce que** ledit canal (16) possède plusieurs sorties.

4. Auge selon n'importe laquelle des revendications précédentes **caractérisée en ce que** ledit élément de raccord (5) inclut un anneau supérieur (11) associé au distributeur (4) et plusieurs branches (13) se ramifiant à partir dudit anneau supérieur (11) et en mesure de soutenir ledit plat (2), ledit bord de récupération (15) constituant un anneau inférieur (12) joignant lesdites branches (13).

5. Auge selon n'importe laquelle des revendications précédentes **caractérisée en ce qu'**elle comprend un organe anti-intrusion (19) qui limite l'accès des animaux de petite taille à l'intérieur du plat (2).

6. Auge selon la revendication 5 **caractérisée en ce que** ledit organe anti-intrusion (19) a essentiellement une forme annulaire, il est monté de façon coaxiale au distributeur (4) au-dessus du plat (2) et il forme plusieurs compartiments (23) distribués en rond le long de son profil extérieur.

7. Auge selon la revendication 6 **caractérisée en ce** chaque compartiment (23) a une concavité orientée vers l'extérieur de l'organe anti-intrusion (19), ledit organe anti-intrusion (19) ayant un grand nombre de projections (24) orientées vers l'extérieur, chacune placées entre deux compartiments contigus (23) pour empêcher au moins aux animaux de passer d'un compartiment (23) à l'autre dans ledit plat (2).

8. Auge selon n'importe laquelle des revendications de 5 à 7 **caractérisée en ce que** ledit organe anti-intrusion (19) est soutenu par ledit élément de raccord (5).

9. Auge selon n'importe laquelle des revendications précédentes **caractérisée en ce qu'**elle comprend un collier de positionnement (25) dont la forme est essentiellement annulaire avec un bord circulaire interne (26) en mesure de s'associer de façon amovible au bord périphérique (3) du plat (2), un bord externe (27) se développant vers l'extérieur dudit bord interne (26) au niveau d'une portion supérieure (29) dudit collier (25), une surface de raccord (30) entre ledit bord interne (26) et ledit bord externe (27) au moins partiellement projetée vers l'intérieur de l'auge (1).

10. Auge selon la revendication 9 **caractérisée en ce que** ledit collier de positionnement (25) inclut un grand nombre de positions (33) distribuées le long dudit bord externe (27), chacune desdites positions (33) étant **caractérisée** au moins partiellement par une portion lisse et concave vers le haut (34) de ladite surface (30), et constituant un support pour un seul animal penché vers l'intérieur de l'auge (1).

11. Auge selon la revendication 10 **caractérisée en ce** lesdites positions (33) sont uniformément distribuées le long dudit bord externe (27).

12. Auge selon la revendication 9, 10 ou 11 **caractérisée en ce que** ladite surface (30) possède au moins un premier segment concave (31) s'étendant dudit bord interne (26) audit bord externe (27).

13. Auge selon la revendication 12 **caractérisée en ce que** ladite surface (30) inclut au moins un second segment convexe (32) s'étendant dudit bord externe (27) audit bord interne (26) et se joignant audit premier segment (31).

14. Auge selon n'importe laquelle des revendications de 10 à 13 **caractérisée en ce que** chaque portion de ladite surface (30) qui délimite l'une desdites positions (33) développe sur une partie de surface un cylindre dont l'axe se prolonge en étoile par rapport au collier (25).

15. Auge selon n'importe laquelle des revendications de 10 à 13 **caractérisée en ce que** ce chaque portion de ladite surface (30) qui délimite l'une desdites positions (33) se développe sur une partie de surface essentiellement conique avec sa conicité orientée vers l'extérieur.

16. Auge selon n'importe laquelle des revendications de 10 à 15 **caractérisée en ce que** ledit collier (25) possède une entaille (35) allant dudit bord interne (26) audit bord externe (27) pour permettre au collier de s'ouvrir (25) et de se positionner sur l'auge (1), et des moyens de fixation associés à ladite entaille (35) pour rendre possible ou impossible de façon sélective l'ouverture du collier (25).

17. Auge selon n'importe laquelle des revendications précédentes **caractérisée en ce que** ledit élément de raccord (5) est associé par coulissement audit distributeur (4) selon une direction verticale de coulissement, **en ce que** ledit distributeur (4) possède au moins un premier grand nombre de rainures verticales (36) chacune desquelles possède dans sa partie supérieure (37) un logement (38), et **en ce qu'**elle inclut également au moins un organe d'accouplement (39) en mesure de s'insérer dans lesdits logements (38), chacun desdits logements (38) étant obtenus à une hauteur différente dudit distributeur (4) pour permettre différentes distances de positionnement de la base du distributeur (4) par rapport au plat(2).
